# EUROPEAN PATENT SPECIFICATION

(11) **EP 0 969 186 B1**
(45) Date of publication and mention of the grant of the patent: **09.04.2003**
(21) Application number: 99112839.8
(22) Date of filing: 02.07.1999
(51) Int. Cl.: F01N 3/02, F02M 25/07, F02D 21/08, F01N 3/021, F01N 9/00

(54) **A device for purifying the exhaust gas of an internal combustion engine**
Vorrichtung zum Reinigen von Abgasen einer Brennkraftmaschine
Dispositif pour purifier les gaz d'échappement d'un moteur à combustion interne

(30) Priority: 03.07.1998 JP 18881398; 12.02.1999 JP 3458199; 01.04.1999 JP 9520299
(43) Date of publication of application: 05.01.2000
(73) Proprietor: TOYOTA JIDOSHA KABUSHIKI KAISHA, Aichi-ken 471-8571 (JP)
(72) Inventor: Watanabe, Yoshimasa, Toyota-shi, Aichi-ken 471-8571 (JP); Henda, Yoshimitsu, Toyota-shi, Aichi-ken 471-8571 (JP); Tahara, Juun, Toyota-shi, Aichi-ken 471-8571 (JP); Yanagihara, Hiromichi, Toyota-shi, Aichi-ken 471-8571 (JP); Araki, Yasushi, Toyota-shi, Aichi-ken 471-8571 (JP)
(74) Representative: Grams, Klaus Dieter, Dipl.-Ing.

(56) References cited:
- EP-A- 0 831 209
- US-A- 4 709 547
- PATENT ABSTRACTS OF JAPAN vol. 1998, no. 02, 30 January 1998 (1998-01-30) & JP 09 268910 A (TOYOTA MOTOR CORP), 14 October 1997 (1997-10-14)

## Description

### BACKGROUND OF THE INVENTION

### 1. Field of the Invention

The present invention relates to a device for purifying the exhaust gas of an internal combustion engine.

### 2. Description of the Related Art

Exhaust gas discharged from an internal combustion engine, in particular a diesel engine, contains harmful particulates mainly composed of carbon, which must be removed and not discharged into the atmosphere. For this purpose, it is suggested that a particulate trap is arranged in the exhaust system of an engine, as a filter for trapping the particulates. Since such a particulate trap causes a large exhaust resistance as the amount of trapped particulates increases, it is necessary to periodically burn the trapped particulates so that the particulate trap is regenerated.

If the exhaust gas becomes very hot in high engine load and high engine speed operations, the particulates ignite and burn naturally and thus the particulate trap can be regenerated. JP-U-5-69311 and EP-A-0 831 209 suggest that a particulate trap is arranged in each exhaust port. Therefore, the particulate traps can be arranged close to the engine body so that the heat of exhaust gas can be used effectively in a regeneration of each particulate trap.

The dimensions of particulates are very small. On the other hand, the pores of the particulate trap have the dimension considerably larger than that of the particulates such that the particulate trap itself does not cause a large exhaust resistance. In such a particulate trap, the particulates stick and deposit around the pores of the particulate trap, and thus are trapped thereon. When the deposit of the particulates grows large and thus the substantial dimensions of the pores are reduced, the particulate trapping ability in the particulate trap increases.

However, if the particulate trap is arranged close to the engine body as the above mentioned, the exhaust gas passes through each particulate trap immediately after it is discharged from each cylinder so that the exhaust gas has a relative high flow speed, and thus the deposit of the particulates is easily broken before it grows large. Accordingly, the particulate trapping ability in each particulate trap does not increase but is maintained low.

On the other hand, combustion products of the engine oil contained in the exhaust gas, so-called "ashes", are also trapped in the particulate trap. It is very difficult to burn the ashes and thus the ashes remain and deposit on the particulate trap after the particulates have burned so that the exhaust resistance of the particulate trap increases.

To break the deposit of the ashes and to discharge the segments of the deposit to the downstream side of the particulate trap, the EP-A-0831209 suggests to suddenly change the pressure in the exhaust passage of the internal combustion engine. The means for regenerating the particulate traps include an exhaust gas recirculating passage communicating the intake passage of the internal combustion engine on the upstream side of the exhaust branch portion with the exhaust passage on the downstream of the exhaust merging portion, and a bypass passage bypassing a turbine of a turbo-charger on the downstream side of the connecting portion with the recirculating passage.

### SUMMARY OF THE INVENTION

In view of the above, it is an object of the present invention to provide a device for purifying the exhaust gas of an internal combustion engine, which can prevent an exhaust resistance of the particulate traps arranged on each exhaust port from increasing due to the deposit of ashes thereon, and which can increase the particulate trapping ability.

The above object is achieved by the devices set forth in the independent claims. The dependent claims define advantageous developments of the invention.

According to the invention, the devices share the common feature that each exhaust port is communicated with at least one other exhaust port on the upstream side of each particulate trap by a communicating passage. Thereby, in an exhaust stroke of each cylinder, the exhaust gas is distributed to the particulate traps and passes through the particulate traps with reduced speed. Thus, the growing of the deposit of particulate is not arrested and the particulate trapping ability in each particulate trap can increase.

In principle, it could be considered that a valve is provided on each communicating passage between two exhaust ports, and each communicating passage is closed by the valve such that the relative high flow speed exhaust gas discharged from the cylinder can pass, immediately thereafter, through only the corresponding particulate trap. However, the deposit of the ashes is firmer than the deposit of the particulate and the inventors were confronted with the problem that the deposit of the ashes was not broken.

To break the deposit of the ashes, the devices according to the invention comprise alternative means for changing the flow of exhaust gas as defined in the independent claims.

The present invention will be more fully understood from the description of preferred embodiments of the invention set forth below, together with the accompanying drawings.

### BRIEF DESCRIPTION OF THE DRAWINGS

In the drawings:
Fig. 1 is schematic illustration of a diesel engine with a device for purifying the exhaust gas according to the present invention;
Fig. 2 is a graph illustrating a change of flow speed of exhaust gas flowing into a specific particulate trap when the communicating valves are opened.
Fig. 3 is a graph illustrating a change of flow speed of exhaust gas flowing into a specific particulate trap when the communicating valves are closed.
Fig. 4 is a first routine for removing ashes from the particulate traps;
Fig. 5 is a second routine for removing ashes from the particulate traps;
Fig. 6 is a third routine for removing ashes from the particulate traps;
Fig. 7 is a fourth routine for removing ashes from the particulate traps;
Fig. 8 is a fifth routine for removing ashes from the particulate traps;
Fig. 9 is a graph illustrating a change of flow speed of exhaust gas flowing into a specific particulate trap when the corresponding engine cylinder is stopped.
Fig. 10 is a sixth routine for removing ashes from the particulate traps;
Fig. 11 is a seventh routine for removing ashes from the particulate traps;
Fig. 12 is a eighth routine for removing ashes from the particulate traps;
Fig. 13 is a ninth routine for removing ashes from the particulate traps;
Fig. 14 is a tenth routine for removing ashes from the particulate traps;
Fig. 15 is a eleventh routine for removing ashes from the particulate traps;
Fig. 16 is a twelfth routine for removing ashes from the particulate traps;
Fig. 17 is a thirteenth routine for removing ashes from the particulate traps;
Fig. 18 is a fourteenth routine for removing ashes from the particulate traps; and
Fig. 19 is a map for determining an engine operating area used in the thirteenth or fourteenth routine.

### DESCRIPTION OF THE PREFERRED EMBODIMENT

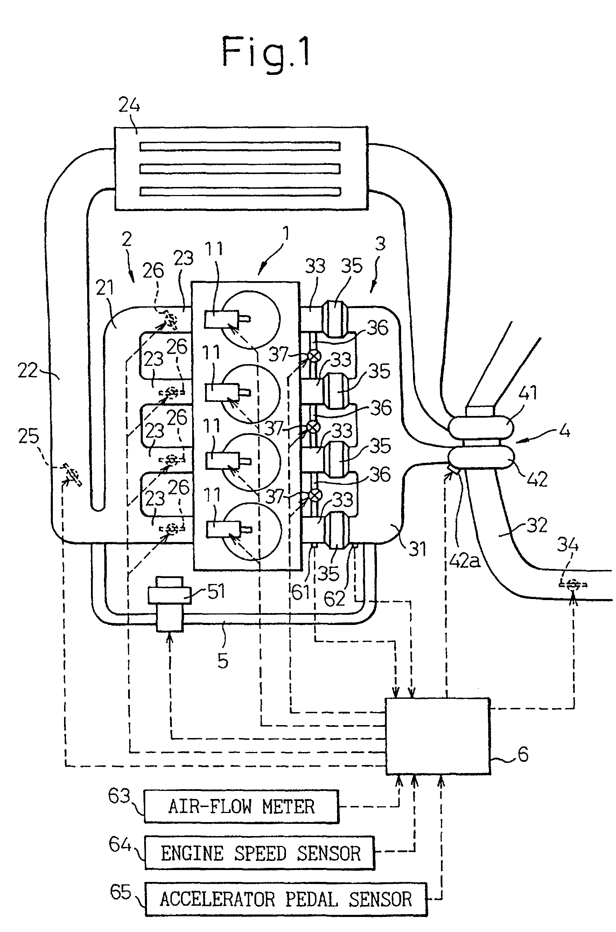

Fig. 1 is a schematic illustration of a diesel engine with a device for purifying the exhaust gas according to the present invention. In Fig. 1, reference numeral 1 designates an internal combustion engine body for an automobile. In particular, it is a 4-cylinder type diesel engine. A fuel injector 11 is arranged on each cylinder of the engine body 1 to inject fuel directly into the cylinder. Reference numeral 2 is an intake system. The intake system 2 has a branch portion 21, an intake passage 22 positioned on upstream side of the branch portion 21, and an intake port 23 which communicates the branch portion with each cylinder. The intake passage 22 is provided with an inter-cooler 24, leads from the atmosphere via the compressor 41 of a turbocharger 4 arranged on upstream side of the inter-cooler 24, and has a throttle valve 25 on downstream side of the inter-cooler 24. The throttle valve 25 is not linked with an accelerator pedal, and is actuated by a step-motor and the like so that an opening degree thereof can be freely set. Each intake port 23 is provided with an intake air control valve 26.

The exhaust system 3 has a merging portion 31, an exhaust passage 32 positioned on downstream side of the merging portion 31, and an exhaust port 33 which communicates the merging portion 31 with each cylinder. The exhaust passage 32 leads to the atmosphere via the turbine 42 of the turbocharger 4, and has an exhaust gas control valve 34 on the downstream side of the turbine 42. The exhaust gas control valve 34 is a normally-open valve. The entrance of exhaust gas in the turbine 42 is provided with a variable nozzle 42a. The variable nozzle 42a can vary an exhaust gas flow speed into the turbine 42, and thereby a turbine rotational speed can be controlled to a desired speed even if the flow rate of the exhaust gas is changed. Each exhaust port 33 is provided with a particulate trap 35, and is communicated with an adjacent exhaust port via a communicating passage 36 on upstream side of the particulate trap 35. Each communicating passage 36 has a communicating valve 37 which can shut the communicating passage 36. Each communicating valve 37 is a normally-open valve. A first pressure sensor 61 is arranged on immediately upstream side of the particulate trap 35 of the exhaust system 3, i.e., on the upstream portion of the particulate trap 35 in the exhaust port 33. A second pressure sensor 62 is arranged on downstream side of the particulate trap 35 of the exhaust system 3, i.e., on the merging portion 31 of the exhaust system 3.

An exhaust gas recirculation passage 5 is arranged between the merging portion 35 of the exhaust system 3 and the intake passage 22 of the intake system 2. The exhaust gas recirculation passage 5 is provided with an exhaust gas recirculation control valve 51 for controlling an amount of exhaust gas recirculated. The primary component of the exhaust gas is an inert gas which has a large heat capacity. Therefore, if the exhaust gas is recirculated into the cylinders, combustion temperatures in the cylinders are lowered by the large heat capacity of inert gas so that an amount of NOx produced can be reduced. On the other hand, the exhaust gas recirculation slightly deteriorates the combustion and thereby is not carried out when a current engine condition is in low engine load operation and the current combustion is relatively unstable, and when a current engine condition is in high engine load operation and requires a high engine output. Accordingly, the exhaust gas recirculation control valve 51 is closed when a current engine condition is in low engine load operation or in high engine load operation, and is opened in accordance with an amount of exhaust gas recirculated when a current engine condition is in middle engine load operation.

Moreover, a general variable valve timing control mechanism (not shown) is arranged on each of the intake valve driven system and the exhaust valve driven system. For example, the variable valve timing control mechanism comprises an intermediate gear which has outer and inner helical teeth, and which connects the cam-shaft with the pulley driven by the crank-shaft. When the intermediate gear is moved axially by oil pressure, electromagnetic force, and the like, the cam-shaft is rotated relative to the pulley. Thus, in particular, intake valve close timings, exhaust valve open timings, and exhaust valve close timings can be freely varied. As a variable valve timing control mechanism, an electromagnetic (solenoid or piezoelectric element type) actuator for actuating the intake valve or the exhaust valve can also be used without a cam-shaft.

Each particulate trap 35 is, for example, a porous material particulate trap formed by a porous material such as ceramic. The particulate trap has many longitudinal spaces which are subdivided by partition walls extending longitudinally. In two longitudinal spaces which are adjacent each other, blocking members made from a ceramic are arranged at the exhaust gas upstream side of one longitudinal space and at the exhaust gas downstream side of the other longitudinal space. Thus the two longitudinal spaces which are adjacent each other become a trap passage in which the exhaust gas flows via the partition wall from the upstream side to the downstream side. The partition wall made from a porous material traps the particulates as a trap wall when the exhaust gas passes therethrough.

Each particulate trap may be made, for example, of a metallic fiber particulate trap which is formed by heat-durable metallic fiber nonwoven sheets and heat-durable metal corrugated plates. The particulate trap is constructed by a pair of nonwoven sheets and a pair of corrugated plates alternately overlaid with each other in the thickness direction in a spiral manner, and has many longitudinal spaces between the nonwoven sheets and the corrugated plates. The heat-durable metallic fiber composing the nonwoven sheet and the heat-durable metal forming the corrugated plate may be an alloy of Fe-Cr-Al or Ni-Cr-Al. In the two nonwoven sheets, one surface of one nonwoven sheet and one surface of the other sheet are in close contact, and are continuously welded to each other, along the upstream edges thereof, and the other surface of the one nonwoven sheet and the other surface of the other nonwoven sheet are in close contact, and continuously welded to each other, along the downstream edges thereof. Thus the two longitudinal spaces which are radially adjacent to each other become a trap passage in which the exhaust gas flows via the nonwoven sheet from the upstream side to the downstream side. The nonwoven sheet traps the particulates as a trap wall when the exhaust gas passes therethrough.

Reference numeral 6 designates an electronic control unit (ECU) for controlling the fuel injectors 11, the throttle valve 25, the intake air control valves 26, the exhaust gas control valve 34, the communicating valves 37, the variable nozzle 42a of the turbocharger 4, the exhaust gas recirculation control valve 51, and the variable valve timing mechanisms. The first pressure sensor 61 and the second pressure sensor 62 are connected to the ECU 6. An air-flow meter 63 for detecting an amount of intake air supplied to the cylinder, an engine speed sensor 64 for detecting an engine speed, and an accelerator pedal sensor for detecting a movement of the accelerator pedal are also connected to the ECU 6.

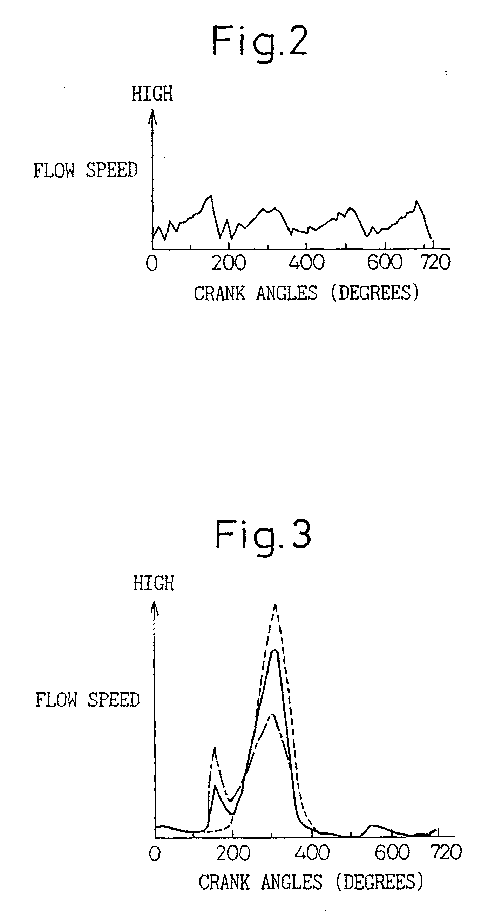

In such a device for purifying exhaust gas, the relative high flow speed exhaust gas discharged from each cylinder is distributed into all of the exhaust ports 33 via each communicating passage 36. Therefore, a change of flow speed of the exhaust gas flowing into a specific particulate trap 35 is transmitted with a relative low speed as shown in Fig. 2. The dimensions of the pores of the particulate traps 35 are considerably larger than that of the particulates. However, since the flow speed of the exhaust gas flowing thereinto is low, the particulates in the exhaust gas stick and deposit around the pores of the particulate traps 35 and thus are trapped. Accordingly, the deposit of the particulates can grow large without breakages. Thus, the substantial dimensions of the pores are reduced to a certain degree so that the particulate trapping ability in the particulate traps 35 can increase.

Since each particulate trap 35 is arranged close to the engine body, the particulates trapped on the particulate traps 35 can burn with using of the heat of the exhaust gas effectively when a temperature of the exhaust gas becomes very high in high engine load and high engine speed operations and the like. Thus regeneration of the particulate traps 35 is finished naturally.

On the other hand, in the exhaust gas, oxides or sulfides of calcium or phosphorus are also contained as combustion products of the engine oil entered into the cylinders. These are so called "ashes", and have the dimensions similar to that of the particulates. Although the amount of ash produced is more little than that of particulates produced, the ashes are trapped on the particulate traps 35 in the same manner. It is very difficult to burn the ashes and thus the ashes remain and deposit on the particulate traps after the particulate has burned so that the exhaust resistance of the particulate traps increase.

A chain line in Fig. 3 shows a change of flow speed of exhaust gas flowing into a specific particulate trap 35 when each communicating passage 36 is shut by each communicating valve 37. In an exhaust stroke of the corresponding cylinder, two peak flow speeds are generated. The first peak flow speed is generated when the high pressure combustion gas in the cylinder jets simultaneously with the exhaust valve opening. The second peak flow speed is generated when a large amount of the combustion gas is discharged from the cylinder involving the piston rising.

Thus, the combustion gas in the cylinder flows into the particulate trap 35 with the two peak flow speeds. Although each peak speed is relative high, the deposit of the ashes is firmer than that of the particulates and thus the deposit of the ashes cannot be broken. Therefore, if each communicating passage 36 is merely shut by each communicating valve 37, the ashes deposited on the particulate traps 35 cannot be removed therefrom.

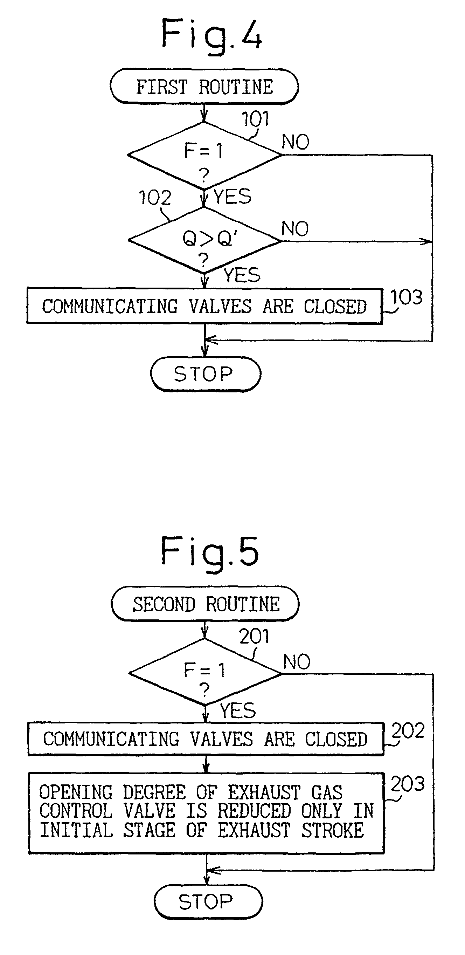

In the present embodiment, the ECU 6 carries out a first routine shown in Fig. 4. In the first routine, first at step 101, it is determined if a flag (F) is (1). The flag (F) is reset to (0) when it is not required to remove ashes from the particulate traps 35. The flag (F) is set to (1) when it is required to remove ashes from the particulate traps 35. However, the flag (F) is set to (1) when an exhaust resistance of each particulate trap 35 has not become large enough to significantly influence an engine performance. Therefore, the ashes may not be removed from the particulate traps 35 rapidly. A fact that a differential pressure between two pressures detected by the first pressure sensor 61 and the second pressure sensor 62 (for example, immediately after the particulates trapped on the particulate traps 35 have burned and the particulate traps 35 have been regenerated) becomes larger than a predetermined pressure, a running distance of the automobile becomes larger than a predetermined distance, or an integration value of an engine speed or an amount of injected fuel becomes larger than a predetermined value, can be used for setting on the flag (F).

When the result at step 101 is negative, an amount of ashes deposited on the particulate traps 35 is small and the routine is stopped. On the other hand, when the result at step 101 is affirmative, the routine goes to step 102 and it is determined if a current amount of fuel injected (Q) is larger than a predetermined amount (Q'). When the result is negative, it is not in high engine load operations and the routine is stopped. On the other hand, when the result at step 102 is affirmative, the routine goes to step 103 and the communicating valves 37 are closed. In a high engine load operation, a combustion pressure becomes very high, as a large amount of fuel injected, and thus each peak flow speed of the exhaust gas generated during an exhaust stroke of each cylinder is higher than that in normal (middle or low) engine load operations. Therefore, in an exhaust stroke of each cylinder, the deposit of ashes can be broken and segmented by the exhaust gas flowing into the corresponding particulate trap 35 with the two higher peak flow speed, and thus the segments of the deposit of ashes can be discharged to the downstream side of the corresponding particulate trap 35.

In the present embodiment, the ECU 6 may carry out a second routine shown in Fig. 5. In the second routine, first at step 201, it is determined if a flag (F) similar to that in the first routine is (1). When the result is negative, the amount of ashes deposited on the particulate traps 35 is small and the routine is stopped. On the other hand, when the result at step 201 is affirmative, the routine goes to step 202 and the communicating valves 37 are closed. Next, the routine goes to step 203, an opening degree of the exhaust gas control valve 34 is reduced only in an initial stage of an exhaust stroke of each cylinder. In result, a flow speed of exhaust gas flowing into a specific particulate trap 35 changes as shown by a solid line of Fig. 3.

In an initial stage of an exhaust stroke of each cylinder, an opening degree of the exhaust gas control valve 34 is reduced and thus an exhaust resistance of the exhaust system increases at this time. Therefore, an amount of the combustion gas jetted from each cylinder simultaneously with the exhaust valve opening is reduced so that the first peak flow speed is made low. Thereafter, an amount of the combustion gas remained in each cylinder increases by a reduced amount of the combustion gas jetted from each cylinder simultaneously with the exhaust valve opening, and is forced to discharge from each cylinder when the piston rises. At the same time, the exhaust gas control valve 34 is fully opened and thus the second peak flow speed of the exhaust gas discharged from each cylinder becomes very high. Therefore, the deposit of ashes can be broken and segmented by the exhaust gas flowing into each particulate trap 35 with the higher second peak flow speed, and thus the segments of the deposit of ashes can be discharged to the downstream side of each particulate trap 35.

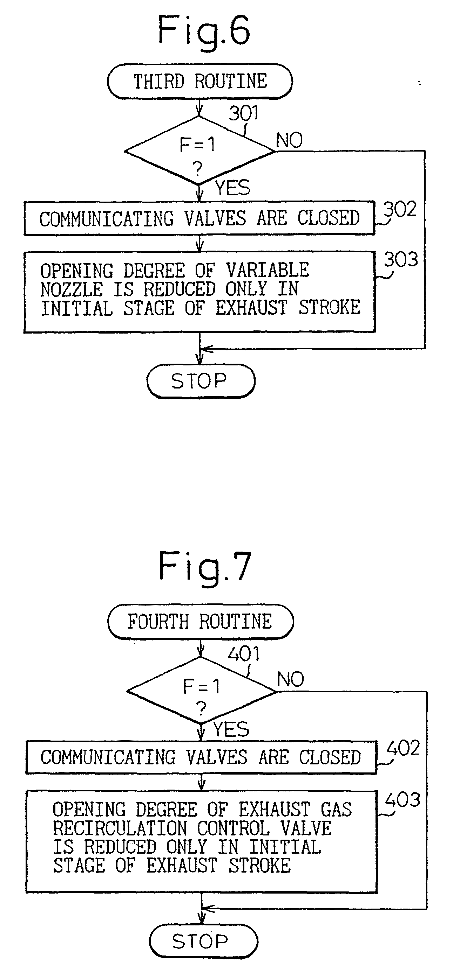

In the present embodiment, the ECU 6 may carry out a third routine shown in Fig. 6. Only the differences between the second routine and the third routine will be explained. In the third routine, at step 303, an opening degree of the variable nozzle 42a of the turbocharger 4 is reduced only in an initial stage of an exhaust stroke of each cylinder, instead of the exhaust gas control valve 34. Therefore, in an initial stage of an exhaust stroke of each cylinder, an exhaust resistance of the exhaust system 3 increases and thus the second peak flow speed of the exhaust gas discharged from each cylinder becomes very high, thus, the deposit of ashes can be broken and segmented, and the segments of the deposit of ashes can be discharged to the downstream side of each particulate trap 35.

In the second and third routines, to break the deposit of ashes, each communicating passage 36 is shut by each communicating valve 37 and only in an initial stage of an exhaust stroke of each cylinder, the exhaust system 3 is throttled by the exhaust gas control valve 34, the variable nozzle 42a, or the like, namely, the exhaust gas flowing into each particulate trap 35 is restrained only at this time. Thus, thereafter when the throttling of the exhaust system is released, a flow speed of the exhaust gas flowing into each particulate trap 35 increases so that the deposit of ashes can be broken.

In the present invention, a mechanism for restraining the exhaust gas flowing into each particulate trap 35 does not limit the exhaust gas control valve 34 or the variable nozzle 42a constructed in the present embodiment. For example, the exhaust gas control valve 34 may be positioned on upstream or downstream side of the particulate trap 35 of each exhaust port 33. Furthermore, a period to restrain the exhaust gas flowing into each particulate trap 35 is not limited to an initial stage of an exhaust stroke of each cylinder. For example, the period may be the whole current exhaust stroke of each cylinder. In this case, when the restraining the exhaust gas flowing into each particulate trap 35 is released at next exhaust stroke, a flow speed of the exhaust gas flowing into each particulate trap 35 can increase so that the deposit of ashes can be broken. Namely, if the exhaust gas flowing into each particulate trap 35 is temporarily restrained, the above-mentioned effects can be obtained.

In the present embodiment, the ECU 6 may carry out a fourth routine shown in Fig. 7. Only the differences between the second routine and the fourth routine are explained. In the fourth routine, at step 403, an opening degree of the exhaust gas recirculation control valve 51 is reduced only in an initial stage of an exhaust stroke of each cylinder, instead of the exhaust gas control valve 34. Therefore, in an initial stage of an exhaust stroke of each cylinder, an amount of exhaust gas passing through the exhaust gas recirculation passage 5 is reduced and thus an amount of exhaust gas passing through each particulate trap 35 is also reduced. Accordingly, in an initial stage of exhaust stroke of each cylinder, an amount of exhaust gas jet from each cylinder can be reduced and thus the above-mention effects can be obtained.

Of course, in the fourth routine, a period for reducing an opening degree of the exhaust gas recirculation valve 51 does not limit an initial stage of an exhaust stroke of each cylinder. The period may be the whole current exhaust stroke of each cylinder. Therefore, the exhaust gas flowing into each particulate trap 35 is temporarily restrained and thus the above-mentioned effects can be obtained.

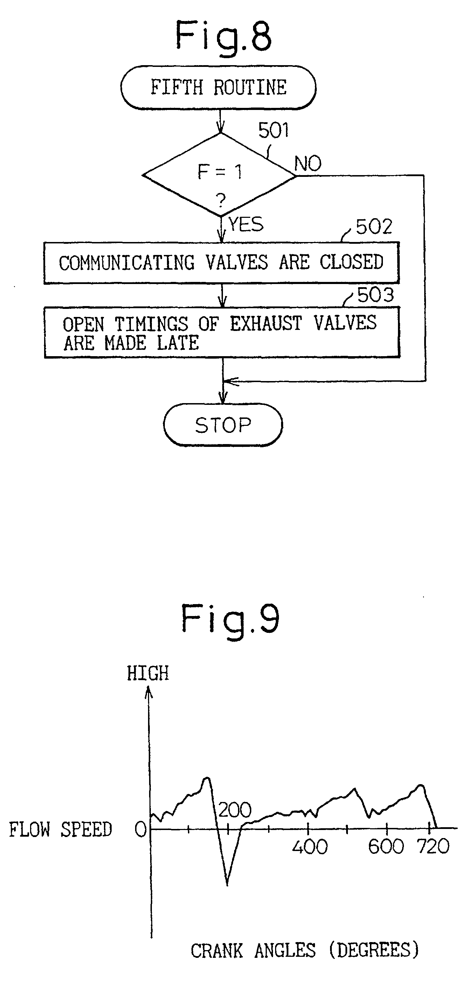

In the present embodiment, the ECU 6 may carry out a fifth routine shown in Fig. 8. Only the differences between the second routine and the fifth routine are explained. In the fifth routine, at step 503, open timings of the exhaust valves are made late by the variable valve timing control mechanism. Therefore, in an initial stage of an exhaust stroke of each cylinder, the combustion gas is prevented from jetting from each cylinder, as shown in a dot line of Fig. 3. Thereafter, a large amount of the combustion gas remained in each cylinder is forced to discharge from each cylinder when the piston rises. Thus, the exhaust gas flowing into each particulate trap 35 is temporarily restrained and the above-mentioned effects can be obtained.

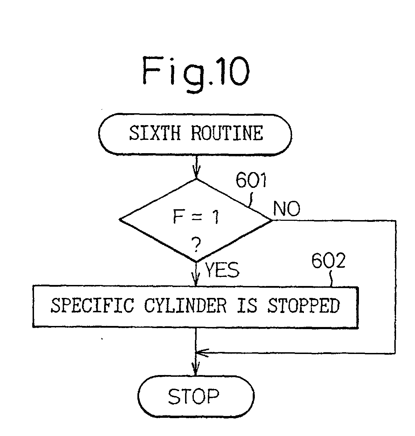

In the present embodiment, the ECU 6 may carry out a sixth routine shown in Fig. 10. In the sixth routine, first at step 601, it is determined if a flag (F) similar to that in the first routine is (1). When the result is negative, an amount of ash deposited on the particulate traps 35 is small and the routine is stopped. On the other hand, when the result at step 601 is affirmative, the routine goes to step 602 and fuel injection is stopped in a specific cylinder by controlling the corresponding fuel injector 11 and thus the specific cylinder is stopped. Since combustion is not carried out in the specific cylinder, when the exhaust valve is opened in the specific cylinder, a pressure within the specific cylinder is nearly equal to the negative pressure within the intake system 2 on the downstream side of the throttle valve 25 during the intake stroke. On the other hand, a pressure within the merging portion 31 of the exhaust system 3 becomes higher than a standard atmospheric pressure by the exhaust gas discharged from the other cylinders. Therefore, as shown in Fig. 9 illustrating a change of flow speed of the exhaust gas flowing into the particulate trap 35 which corresponds to the stopped specific cylinder when the exhaust valve is opened, a flow speed of the exhaust gas flowing into this particulate trap 35 becomes negative due to a differential pressure between the pressure within this specific cylinder and the pressure on the downstream side of this particulate trap 35 in the exhaust system 3. Namely, the exhaust gas flows from the merging portion 31 of the exhaust system 3 into the specific cylinder through this particulate trap 35, and thus an reverse flow of the exhaust gas occurs.

The ash is deposited on each particulate traps 35 such that an exhaust resistance for the normal flow of the exhaust gas from each the cylinder to the merging portion 31 becomes as small as possible. Therefore, in each particulate trap 35, the resistance to the reverse flow of the exhaust gas becomes relative large and thus the reverse flow of the exhaust gas easily breaks and segments the deposit of ashes. The ash, immediately being produced in the cylinder, have a SOF (soluble organic fraction) which has adhesive property, but SOF has disappeared in the segments of the deposit of ash. Accordingly, the segments of the deposit of ashes hardly sticks again on the particulate trap 35 and thus the segments can be easily discharged to the downstream side of the particulate trap 35 by the normal flow of exhaust gas produced in next exhaust stroke of the specific cylinder.

In the sixth routine, the communicating valves 37 are not closed. Therefore, in the exhaust stroke of the specific stopped cylinder, the exhaust gas passes reversely through all of the particulate traps 35 via each communicating passage 36. The exhaust gas passing reversely through the particulate traps 35 other than the particulate trap corresponding to the specific stopped cylinder, must also pass through the communicating passage 36 and thus an amount thereof becomes relative small. Accordingly, a flow speed thereof becomes lower than that shown in Fig. 9. However, as above-mentioned, the ash is deposited on each particulate traps 35 such that a resistance to the reverse flow of the exhaust gas becomes relatively large and thus the weak reverse flow of the exhaust gas easily break the deposit of ashes. Thus, in the sixth routine, it is not required for the communicating valves 37 to be closed. Namely the communicating valves 37 can be omitted. The amount of the exhaust gas passing reversely through the particulate trap 35 corresponding to the specific stopped cylinder is the most and the flow speed thereof is the fastest. Therefore, in the particulate trap corresponding to the specific stopped cylinder, the ashes are removed more efficiently. Accordingly, in the sixth routine, it is preferably to change the stopped cylinder successively.

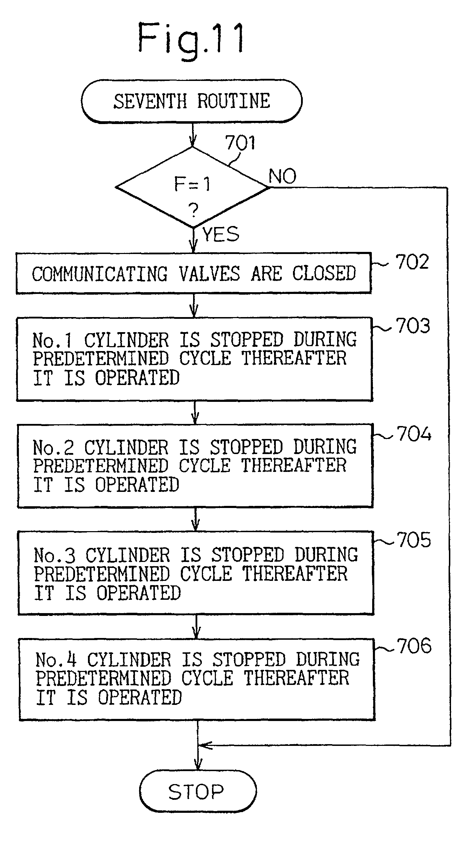

In the present embodiment, the ECU 6 may carry out a seventh routine shown in Fig. 11. In the seventh routine, first at step 701, it is determined if a flag (F) similar to that in the first routine is (1). When the result is negative, the amount of ash deposited on the particulate traps 35 is small and the routine is stopped. On the other hand, when the result at step 701 is affirmative, the routine goes to step 702 and the communicating valves 37 are closed. Next, at step 703, a fuel injection is stopped in the No. 1 cylinder and thus the No. 1 cylinder is stopped during a predetermined cycle (for example, one cycle) and thereafter the No. 1 cylinder is operated. Thus, since the communicating valves 37 are closed, when the exhaust valve of the stopped No. 1 cylinder is opened during the predetermined cycle; the exhaust gas flows reversely from the merging portion 31 into the No. 1 cylinder, and passes reversely only through the particulate trap 35 corresponding to the No. 1 cylinder. Therefore, an amount of the exhaust gas passing reversely through the particulate trap 35 becomes larger than that in the sixth routine, and a flow speed thereof becomes faster than that in sixth routine. Accordingly, the ashes on the particulate trap corresponding to the No. 1 cylinder can be removed more certainly. Next, at step 704, a fuel injection is stopped in the No. 2 cylinder and thus the No. 2 cylinder is stopped during a predetermined number of cycles (for example, one cycle) and thereafter the No. 2 cylinder is operated. Next, at step 705, a fuel injection is stopped in the No. 3 cylinder and thus the No. 3 cylinder is stopped during a predetermine number of cycles (for example, one cycle) and thereafter the No. 3 cylinder is operated. Next, at step 706, a fuel injection is stopped in the No. 4 cylinder and thus the No. 4 cylinder is stopped during a predetermined number of cycles (for example, one cycle) and thereafter the No. 4 cylinder is operated. Thus, the ashes on all of the particulate traps 35 can be removed more certainly.

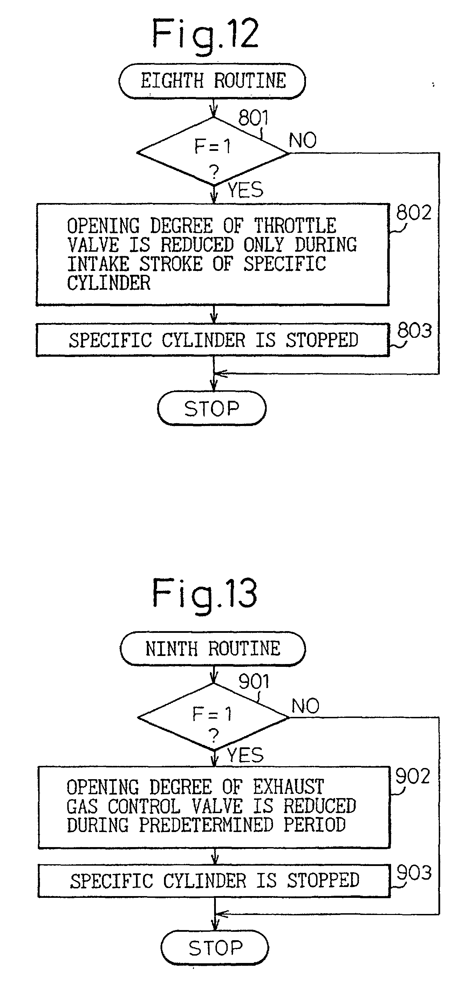

In the present embodiment, the ECU 6 may carry out a eighth routine shown in Fig. 12. Only the differences between the sixth routine and the eighth routine are explained. In the eighth routine, before a specific cylinder is stopped at step 803, at step 802, an opening degree of the throttle valve 25 is reduced only during an intake stroke of the specific cylinder. Therefore, an amount of intake air supplied to the specific cylinder is reduced and thus, when the exhaust valve is opened, a degree of negative pressure within the specific cylinder can increase. Accordingly, a difference between the pressure within the specific cylinder and a pressure within the merging portion 31 of the exhaust system 3 becomes higher and thus an flow speed of the exhaust gas passing reversely through each particulate trap 35 becomes higher so that the ashes on each particulate trap 35 can be more easily broken.

In the eighth routine, an opening degree of the throttle valve 25 is reduced during an intake stroke of the stopped specific cylinder and immediately thereafter the opening degree of the throttle valve 25 is made large. However, an amount of intake air supplied to the other cylinder may not increase instantly and thus an intended engine output may not be obtained.

In the present embodiment, the intake air control valve 26 is arranged with each intake port 23. Accordingly, if an opening degree of the intake air control valve 26 corresponding to the stopped specific cylinder is reduced, instead of an opening degree of the throttle valve 25, the ashes on each particulate trap 35 can be more easily broken without influence upon an amount of intake air supplied to the other cylinders.

In the present embodiment, the ECU 6 may carry out a ninth routine shown in Fig. 13. Only the differences between the sixth routine and the ninth routine are explained. In the ninth routine, before a specific cylinder is stopped at step 903, at step 902, an opening degree of the exhaust gas control valve 34 is reduced during a predetermined period. Therefore, a pressure at the merging portion 31 of the exhaust system 3 can increase. Accordingly, when the exhaust valve of the stopped specific cylinder is opened, a difference between the pressure within the stopped specific cylinder and the pressure within the merging portion 31 becomes higher, and thus an flow speed of the exhaust gas passing reversely through each particulate trap 35 becomes higher so that the ashes on each particulate trap 35 can be more easily broken.

At step 902 of the ninth routine, an opening degree of the variable nozzle 42a of the turbocharger 4 or an opening degree of the exhaust gas recirculation control valve 51 may be reduced during a predetermined period, instead of an opening degree of the exhaust gas control valve 34. Therefore, the exhaust gas in the merging portion 31 of the exhaust system 3 is similarly restrained therein, and when the exhaust valve of the stopped specific cylinder is opened, the pressure within the merging portion 31 has become higher, and thus the above-mentioned effects can be obtained.

In the second, third, and fourth routines, the exhaust gas control valve 34, the variable nozzle 42a of the turbocharger 4, and the exhaust gas recirculation control valve 51 function as a first restraint means for temporarily restraining the exhaust gas flowing into the particulate traps. However, in the ninth routine, the exhaust gas control valve 34, the variable nozzle 42a of the turbocharger 4, and the exhaust gas recirculation control valve 51 function as a second restraint means for temporarily restraining the exhaust gas flowing out from the merging portion 31 of the exhaust system 3.

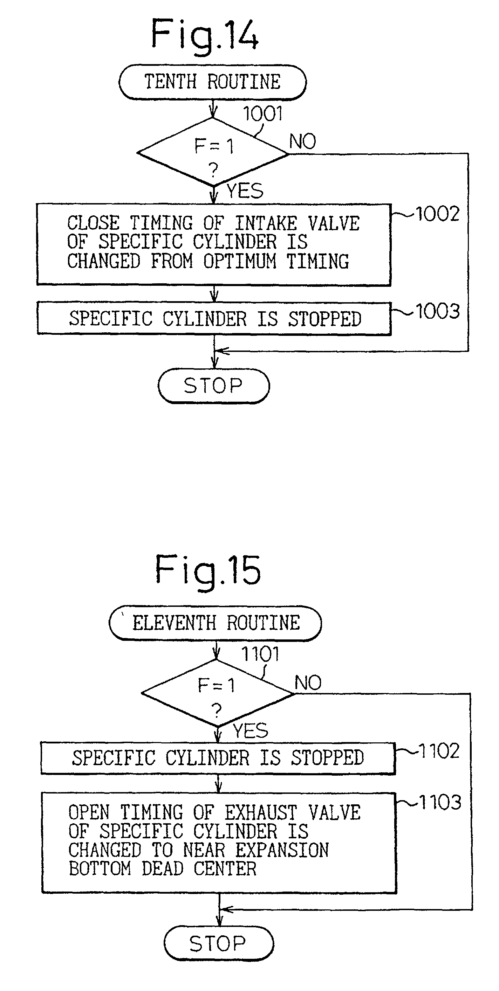

In the present embodiment, the ECU 6 may carry out a tenth routine shown in Fig. 14. Only the differences between the sixth routine and the tenth routine are explained. In the tenth routine, before a specific cylinder is stopped at step 1003, at step 1002, the close timing of the intake valve of the specific cylinder is changed from an optimum timing by the above-mentioned variable valve timing control mechanism. In a general internal combustion engine with a variable timing control mechanism for the intake valve, a close timing of the intake valve at low engine speed operation is set, for example, 20 degrees of crank-angle after the bottom dead center to avoid a large amount of intake air in the cylinder flowing out into the intake port, and a close timing of the intake valve in high engine speed operation is set, for example, 60 degrees of crank-angle after the bottom dead center to increase an amount of intake air in the cylinder by an inertial force thereof. Therefore, if, by the variable valve timing control mechanism, a close timing of the intake valve of the stopped specific cylinder in each engine speed operation is changed from such an optimum timing for increasing an amount of intake air, an amount of intake air supplied to the specific cylinder can be reduced so that a degree of negative pressure within the specific cylinder when the exhaust valve is opened can increase. Accordingly, a difference between the pressure within the specific cylinder and the pressure within the merging portion 31 of the exhaust system 3 becomes higher, and thus an flow speed of the exhaust gas passing reversely through each particulate trap 35 becomes higher so that the ashes on each particulate trap 35 can be more easily broken.

Here, if a close timing of the intake valve is made near an intake top dead center, a degree of negative pressure within the stopped specific cylinder, when the exhaust valve is opened, becomes maximum. Accordingly, a difference between the pressure within the specific cylinder and the pressure within the merging portion 31 of the exhaust system 3 becomes higher. Such a closing of intake valve can be easily carried out by using of a variable valve timing control mechanism which can keep the intake valve closed, for example to make the cam for the intake valve non-operational.

In the present embodiment, the ECU 6 may carry out an eleventh routine shown in Fig. 15. Only the differences between the sixth routine and the eleventh routine are explained. In the eleventh routine, after a specific cylinder is stopped at step 1102, at step 1103, the open timing of the exhaust valve of the specific cylinder is changed to near an expansion bottom dead center by the above-mentioned variable valve timing control mechanism. In a general internal combustion engine with a variable timing control mechanism for the exhaust valve, an open timing of the exhaust valve in low engine speed operation is set, for example, 30 degrees of crank-angle before the bottom dead center, and an open timing of the exhaust valve in high engine speed operation is set, for example, 80 degrees of crank-angle before the bottom dead center, to realize an efficient gas exchange. Therefore, if, by the variable valve timing control mechanism, an open timing of the exhaust valve of the stopped specific cylinder in each engine speed operation is changed to near an expansion bottom dead center, in case that a given amount of intake air is supplied into the stopped specific cylinder, a degree of negative pressure within the specific cylinder when the exhaust valve is opened can increase. Accordingly, a difference between the pressure within the specific cylinder and the pressure within the merging portion 31 of the exhaust system 3 becomes higher, and thus an flow speed of the exhaust gas passing reversely through each particulate trap 35 becomes higher so that the ashes on each particulate trap 35 can be more easily broken.

Thus, by such various means, a pressure within the stopped specific cylinder when the exhaust valve is opened is made low or a pressure within the merging portion 31 of the exhaust system when the exhaust valve is opened is made high, so that a differential pressure therebetween can increase. Therefore, a flow speed of the exhaust gas passing reversely through each particulate trap 35 becomes higher so that the ashes on each particulate trap 35 can be more easily broken. At this time, if the communicating valves 37 are closed in an exhaust stroke of the stopped specific cylinder, the exhaust gas passes reversely only through the corresponding particulate trap 35 and thus the amount of the exhaust gas and the flow speed thereof can increase so that the ashes on the particulate trap 35 can be removed more satisfactorily.

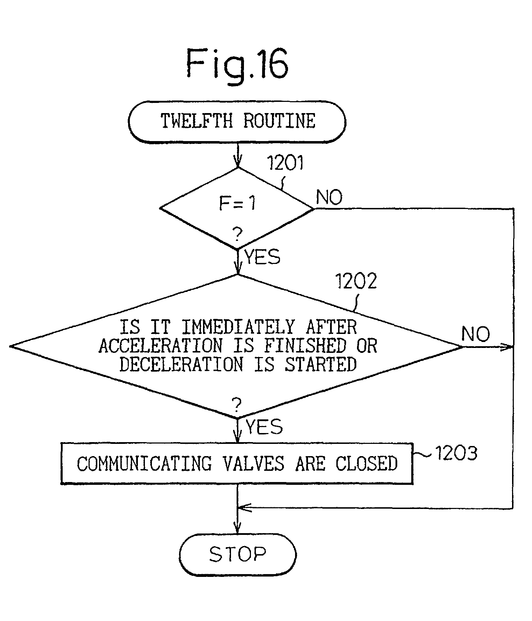

In the present embodiment, the ECU 6 may carry out a twelfth routine shown in Fig. 16. In the twelfth routine, first at step 1201, it is determined if a flag (F) similar to that in the first routine is (1). When the result is negative, an amount of ash deposited on the particulate traps 35 is small and the routine is stopped. On the other hand, when the result at step 1201 is affirmative, the routine goes to step 1202, and an amount of movement of an accelerator pedal is detected by the accelerator pedal sensor 65 and it is determined if it is immediately after an acceleration is finished or a deceleration is started. This determination can be carried out by detecting an amount of fuel change. When the result at step 1202 is negative, the routine is stopped. On the other hand, when the result at step 1202 is affirmative, the routine goes to step 1203 and the communicating valves 37 are closed.

When the communicating valves 37 are closed, a pressure within an exhaust port 33 becomes high in an exhaust stroke of the corresponding cylinder and thereafter becomes low. On the other hand, a pressure within the merging portion 31 of the exhaust system 3 is maintained relatively high by the exhaust gas discharged in an exhaust stroke of each cylinder. Therefore, when the pressure within an exhaust port 33 becomes low, the exhaust gas flows reversely through the particulate trap 35 arranged in the exhaust port 33 by the differential pressure therebetween. In constant engine operations, the higher a pressure of exhaust gas discharged from each cylinder becomes, the higher both of a pressure within an intake port 33 after an exhaust stroke and a pressure within the merging portion 31 of the exhaust system 3 become. Therefore, the differential pressure in constant engine operations is very low so that a flow speed of the exhaust gas flowing reversely through the particulate trap 35 is very low. Therefore, the deposit of ashes cannot be broken.

Immediately after an acceleration is finished or a deceleration is started, an amount of fuel injected is reduced suddenly so that a combustion pressure in each cylinder drops suddenly. Thus, a pressure within an exhaust port 33 after the exhaust stroke of the corresponding cylinder becomes relative low, whereas a pressure within the merging portion 31 of the exhaust system 3 is relative high due to the exhaust gas discharged in an exhaust stroke of each cylinder during the acceleration or before the deceleration. Therefore, the differential pressure becomes high so that a flow speed of the exhaust gas flowing reversely through the particulate trap 35 becomes high, and thus the deposit of ashes can be broken and can be removed from each particulate trap 35.

In high engine load or high engine speed operations, a pressure within the merging portion 31 of the exhaust system 3 is maintained very high due to a large amount of high pressure exhaust gas discharged from each cylinder. Accordingly, if the communicating valves 37 are closed immediately after an acceleration into high engine load or high engine speed operations is finished or a deceleration from high engine load or high engine speed operations is started, a flow speed of the exhaust gas flowing reversely through the particulate trap 35 becomes higher, and thus the deposit of ashes can be broken more certainly and can be removed from each particulate trap 35 more certainly.

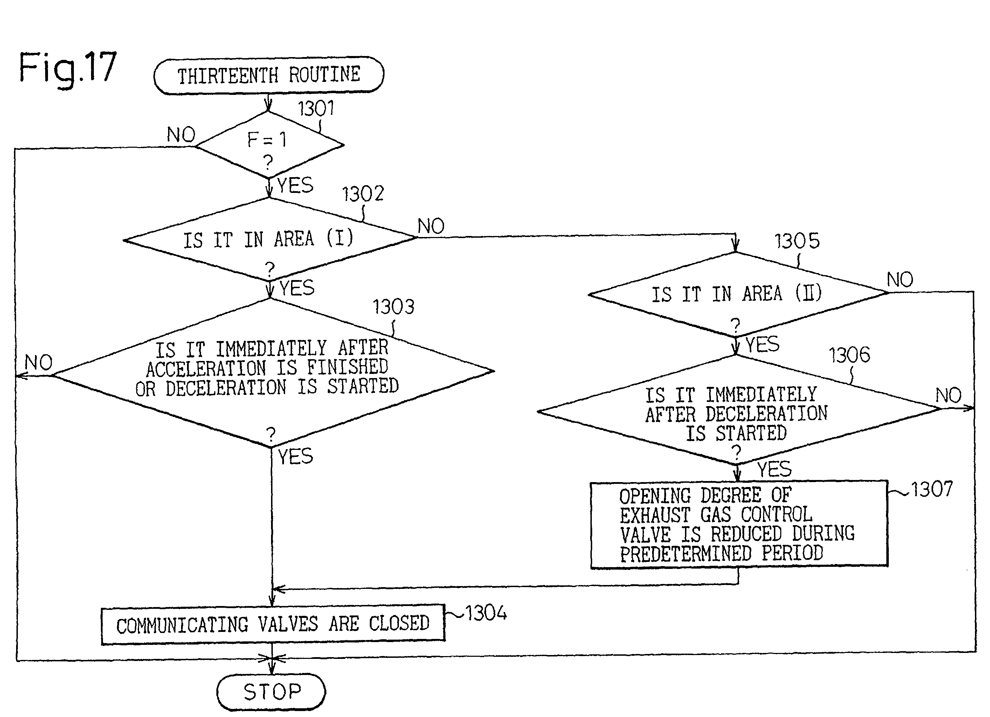

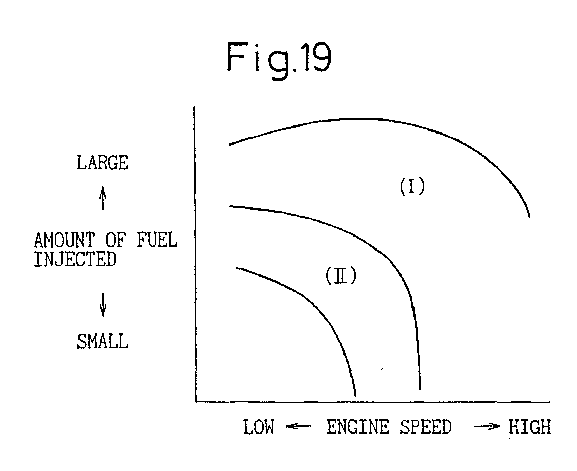

In the present embodiment, the ECU 6 may carry out a thirteenth routine shown in Fig. 17. In the thirteenth routine, first at step 1301, it is determined if a flag (F) similar to that in the first routine is (1). When the result is negative, an amount of ash deposited on the particulate traps 35 is small and the routine is stopped. On the other hand, when the result at step 1301 is affirmative, the routine goes to step 1302, and it is determined if it is in an area (I) of a map shown in Fig. 19, i.e., in high engine load or high engine speed operations. When the result is affirmative, the routine goes to step 1303, and an amount of movement of an accelerator pedal is detected by the accelerator pedal sensor 65 and it is determined if it is immediately after an acceleration is finished or a deceleration is started. This determination can be carried out by detecting an amount of fuel changed. When the result at step 1303 is negative, the routine is stopped. On the other hand, when the result at step 1303 is affirmative, the routine goes to step 1304 and the communicating valves 37 are closed. Thus, as explained in the twelfth routine, due to a relative high flow speed exhaust gas flowing reversely through the particulate trap 35, the deposit of ashes can be broken and can be removed from each particulate trap 35.

On the other hand, when the result at step 1302 is negative, the routine goes to step 1305 and it is determined if it is in an area (II) of the map shown in Fig. 19, i.e., in middle engine load or middle engine speed operations. When the result is negative, i.e., when it is in low engine load and low engine speed operations, a pressure within the merging portion 31 of the exhaust system becomes very low due to the small amount of low pressure exhaust gas discharged from each cylinder. Accordingly, even if the communicating valves 37 are closed, the above mentioned differential pressure is low so that the deposit of ashes may not be broken by the exhaust gas flowing reversely through the particulate trap 35. Thus, the routine is stopped. On the other hand, when the result at step 1305 is affirmative, the routine goes to step 1306 and it is determined if it is immediately after a deceleration has started. When the result is negative, even if the communicating valves 37 are closed, the above mentioned differential pressure is low and thus the routine is stopped. However, when the result at step 1306 is affirmative, the routine goes to step 1307 and an opening degree of the exhaust gas control valve 34 is reduced during a predetermined period. Next, the routine goes to step 1304 and the communicating valves 37 are closed.

Immediately after a deceleration from a medium engine load or medium engine speed operation is started, if the communicating valves 37 are merely closed, the pressure within the merging portion 31 of the exhaust system 3 is relatively low due to the relative low pressure of the exhaust gas discharged from each cylinder so that the above mentioned differential pressure does not become enough high to break the deposit of ashes.

However, in the present routine, at this time, an opening degree of the exhaust gas control valve 34 is reduced so that a pressure within the merging portion 31 of the exhaust system 3 increases, and thus the above mentioned differential pressure becomes enough high to break the deposit of ashes and the ashes can be removed from each particulate trap 35.

At step 1307 of the present routine, an opening degree of the variable nozzle 42a of the turbocharger 4 or an opening degree of the exhaust gas recirculation control valve 51 may be reduced during a predetermined period as the second restraint means for temporarily restraining the exhaust gas flowing out from the merging portion 31 of the exhaust system 3, instead of an opening degree of the exhaust gas control valve 34.

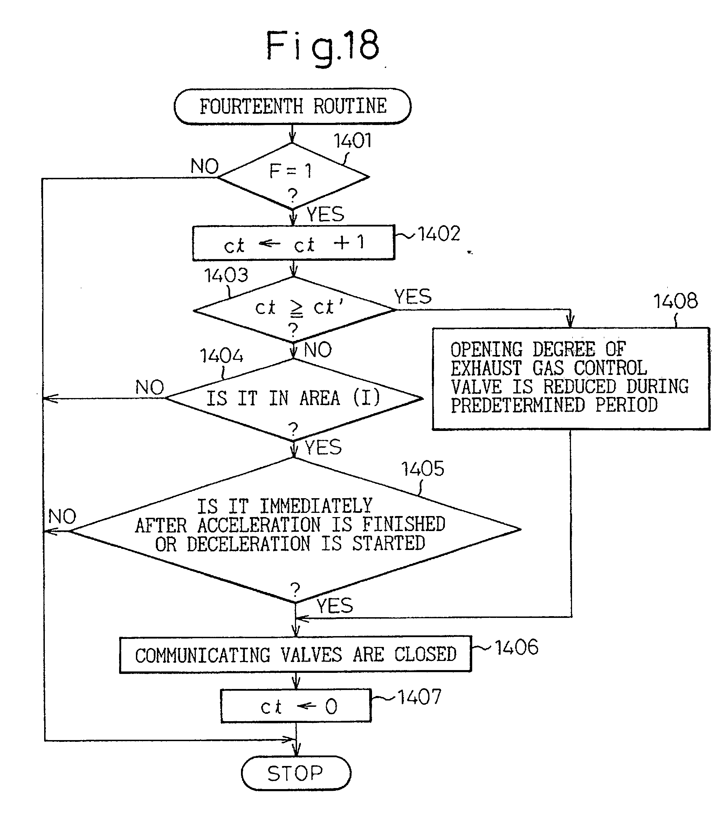

In the present embodiment, the ECU 6 may carry out a fourteenth routine shown in Fig. 18. In the fourteenth routine, at step 1401, it is determined if a flag (F) similar to that in the first routine is (1). When the result is negative, it is not required to remove the ashes from the particulates traps 35 and the routine is stopped. On the other hand, when the result is affirmative, the routine goes to step 1402 and a count value (Ct) which is reset (0) initially is increased by (1). Next, the routine goes to step 1403 and it is determined if the count value (Ct) is equal to or larger than a predetermined value (Ct'). When the result is negative, it is preferable to remove the ashes from the particulate traps 35 but it is not still required to remove the ashes from the particulate traps 35 rapidly. Accordingly, the routine goes to step 1404 and it is determined if it is in an area (I) of the map shown in Fig. 19. When the result is negative, as explained in the thirteenth routine, even if the communicating valves 37 are closed immediately after an acceleration is finished or a deceleration is started, the ash may not be removed from the particulate traps 35 certainly. Accordingly, the routine is stopped. On the other hand, when the result at step 1404 is affirmative, the routine goes to step 1405 and it is determined if it is immediately after an acceleration is finished or a deceleration is started. When the result is affirmative, the routine goes to step 1406 and the communicating valves 37 are closed to remove the ashes from the particulate traps 35. Next, the routine goes to step 1407 and the count value (Ct) is reset (0). On the other hand, when the result at step 1405 is negative, the routine is stopped.

However, when the result at step 1403 is affirmative, the amount of ash deposited on the particulate traps 35 can become very large and thus it is required to remove the ashes from the particulates traps 35 rapidly. Accordingly, to remove ashes compulsively in spite of an engine load operation, the routine goes to step 1408 and an opening degree of exhaust gas control valve 34 is reduced during a predetermined period. Next, the routine goes to step 1406 and the communicating valves 37 are closed. Thus, a pressure within the merging portion 31 of the exhaust system 3 can increase and a differential pressure between pressures within an intake port and within the merging portion 31 can also increase. The differential pressure causes the exhaust gas with a high speed to flow reversely through the particulate trap 35 and thus the deposit of ashes can be broken and the ashes can be certainly removed from the particulate traps 35.

At step 1408 of the present routine, an opening degree of the variable nozzle 42a of the turbocharger 4 or an opening degree of the exhaust gas recirculation control valve 51 may be reduced during a predetermined period as the second restraint means for temporarily restraining the exhaust gas flowing out from the merging portion 31 of the exhaust system 3, instead of an opening degree of the exhaust gas control valve 34.

When the exhaust gas flowing out from the merging portion 31 of the exhaust system 3 is restrained by the second restraint means, the resistance of the exhaust system increases so that an engine output can decrease and a combustion can deteriorate. In the thirteenth routine, the second restraint means is carried out only immediately after a deceleration is started. During a deceleration, even if an engine output decreases or a combustion deteriorates, this does not largely influence the driveability. However, it is not preferable, for driveability, to carry out the second restraint means. In the fourteenth routine, if the ash is removed from each particulate trap 35 in high engine speed and high engine load operations before the amount of ash deposited on each particulate trap 35 has become very large, the second restraint means is not carried out. Thus, the opportunities for carrying out the second restraint means can decrease.

On the other hand, when a specific cylinder is stopped, for example during one cycle, the engine output is reduced slightly. Accordingly, in the sixth, seventh, eighth, ninth, tenth, and eleventh routines, if a specific cylinder is stopped immediately after a deceleration for reducing an engine output is started, this does not influence the driveability. Immediately after an acceleration is finished, an engine output is very large and thus even if a specific cylinder is stopped and an engine output is reduced slightly, this does not largely influence the driveability. Thus, in these routines, a specific cylinder may be stopped immediately after an acceleration is finished or a deceleration is started.

If the exhaust gas becomes very hot in a high engine load and high engine speed operation, the particulate trapped on each particulate trap 35 burn and each particulate trap 35 can be regenerated. However, such a high engine load and high engine speed operation may not be periodically carried out. Accordingly, in next high engine load and high engine speed operation, a large amount of particulates can be trapped on the particulate trap 35. Therefore, it can cause a very large combustion heat and thus the particulate trap 35 can be melted by the heat.

To solve this problem, when a large amount of particulates deposits on each particulate trap 35, the deposit of particulates must be broken and thus the particulates must be removed from each particulate trap 35 early and certainly.

The deposit of particulates can be broken more easily than that of ashes. However, even if the communicating valves 37 are merely closed, a flow speed of exhaust gas flowing through each particulate trap 35 is relative low and thus the deposit of particulates may not be broken quickly and certainly. Accordingly, in this case, if any one of the above mentioned routines is carried out, a large amount of particulate can be removed from each particulate trap 35 quickly and certainly.

In the first, second, third, fourth, fifth, seventy, twelfth, thirteenth, and fourteenth routines, all of the communicating valves 37 are closed simultaneously. However, at least one of the communicating valves 37 may be closed such that an exhaust port on which a specific particulate trap holding ashes or particulates is arranged is not communicate with the other intake ports. at least one particulate trap and at least one communicating valve is closed such that the exhaust port on which at least one particulate trap is arranged is not communicated with the other exhaust port.

## Claims

1. A device for purifying the exhaust gas of an internal combustion engine (1) comprising:
a particulate trap (35) arranged on each exhaust port (33) communicating between the engine cylinders and the exhaust merging portion (31) in the exhaust system (3); and
a restraint means (34; 42a; 51) which can temporarily restrain the exhaust gas flowing into at least one particulate trap (35), **characterized by**
a communicating passage (36) for communicating each exhaust port (33) with at least one other exhaust port on the upstream side of each particulate trap (35); and
a communicating valve (37) which is arranged on said communicating passage (36); and
an operating means (6) for operating said restraint means (34; 42a; 51) to temporarily restrain the exhaust gas flowing into at least one particulate trap (35) and for operating at least one communicating valve (37) to be closed such that the exhaust port (33) on which said at least one particulate trap is arranged is not communicated with the other exhaust port, when it is required to remove ashes from said particulate traps (35).

2. A device according to claim 1, wherein said restraint means is a mechanism (34) for throttling the exhaust system (3).

3. A device according to claim 1, wherein said restraint means is a variable nozzle (42a) for a turbine (42) of turbocharger (4) arranged on the exhaust system (3).

4. A device according to claim 1, wherein said restraint means is an exhaust gas recirculation control valve (51) which is arranged on an exhaust gas recirculation passage (5) connected with the exhaust system (3) on the downstream side of each particulate trap (35).

5. A device according to claim 1, wherein said restraint means is a means for making an open timing of the exhaust valve late.

6. A device for purifying the exhaust gas of an internal combustion engine (1) comprising:
a particulate trap (35) arranged on each exhaust port (33) communicating between the engine cylinders and the exhaust merging portion (31) in the exhaust system (3), **characterized by**
a communicating passage (36) for communicating each exhaust port (33) with at least one other exhaust port on the upstream side of each particulate trap (35);
a communicating valve (37) which is arranged on said communicating passage (36); and
an operating means (6) for operating at least one communicating valve (37) to be temporarily closed such that at least one exhaust port (33) is not communicated with the other exhaust port in high engine load operations, when it is required to remove ashes from said particulate traps (35).

7. A device for purifying the exhaust gas of an internal combustion engine (1) comprising:
a particulate trap (35) arranged on each exhaust port (33) communicating between the engine cylinders and the exhaust merging portion (31) in the exhaust system (3), **characterized by**
a communicating passage (37) for communicating each exhaust port (33) with at least one other exhaust port on the upstream side of each particulate trap (35);
a stopping means (11) which can temporarily stop at least one cylinder; and
an operating means (6) for operating said stopping means (11) to temporarily stop at least one cylinder, when it is required to remove ashes from said particulate traps (35).

8. A device according to claim 7, wherein said operating means (6) operates said stopping means (11) immediately after an acceleration is finished or a deceleration is started in a predetermined engine load operation area (I, II).

9. A device according to claim 7, further comprising a differential pressure increasing means (25; 26; 34; 42a; 51) for increasing a differential pressure between a pressure within said at least one cylinder in an exhaust stroke when said at least one cylinder is stopped by said stopping means (11) and a pressure on the downstream side of said particulate trap (35) in the exhaust port (33) which communicates between said at least one cylinder and the exhaust merging portion (31).

10. A device according to claim 9, wherein said differential pressure increasing means (34; 42a; 51) increases said differential pressure immediately after an acceleration is finished or a deceleration is started in a predetermined engine load operation area (II).

11. A device according to claim 9, wherein said differential pressure increasing means is a restraint means (34; 42a; 51) for restraining the exhaust gas flowing out from the exhaust merging portion before an exhaust stroke of said at least one cylinder when said at least one cylinder is stopped by said stopping means (11).

12. A device according to claim 9, wherein said differential pressure increasing means is a mechanism (25; 26) for decreasing an amount of intake air supplied into said at least one cylinder when said at least one cylinder is stopped by said stopping means (11).

13. A device according to claim 12, wherein said mechanism (26) for decreasing an amount of intake air is arranged on the intake port (23) which communicates between said at least one cylinder and the intake branch portion (21) of the intake system (2).

14. A device according to claim 9, wherein said differential pressure increasing means is a mechanism for varying a close timing of the intake valve of said at least one cylinder so as to decrease an amount of intake air supplied into said at least one cylinder when said at least one cylinder is stopped by said stopping means (11).

15. A device according to claim 9, wherein said differential pressure increasing means is a mechanism for varying an open timing of the exhaust valve of said at least one cylinder to near a bottom dead center when said at least one cylinder is stopped by said stopping means (11).

16. A device according to anyone of claims 7 - 15, wherein a communicating valve (37) is arranged on said communicating passage (37), and when said operating means (6) operates said stopping means (11) to stop temporarily at least one cylinder, at least one communicating valve is closed such that the exhaust port (33) which communicates between said at least one cylinder and the exhaust merging portion (31) in the exhaust system (3) is not communicated with the other exhaust port.

17. A device for purifying the exhaust gas of an internal combustion engine (1) comprising:
a particulate trap arranged on each exhaust port (33) communicating between the engine cylinders and the exhaust merging portion (31) in the exhaust system (3),
**characterized by**
a communicating passage (36) for communicating each exhaust port (33) with at least one other exhaust port on upstream side of each particulate trap (35);
a communicating valve (37) which is arranged on said communicating passage (36); and
an operating means (6) for operating at least one communicating valve (37) to be temporarily closed such that at least one exhaust port (33) is not communicated with the other exhaust port immediately after an acceleration is finished or a deceleration is started in a predetermined engine load operation area (I, II), when it is required to remove ashes from said particulate traps (35).

18. A device according to claim 17, further comprising a differential pressure increasing means (25; 26; 34; 42a; 51) for increasing a differential pressure between pressures upstream and downstream of said particulate trap (35) in said at least one exhaust port (33) when said at least one communicating valve (37) is temporarily closed.

19. A device according to claim 18, wherein said differential pressure increasing means is a restraint means (34; 42a; 51) for restraining the exhaust gas flowing out from the exhaust merging portion (31) before said at least one communicating valve (37) is temporarily closed.

20. A device according to claim 18, wherein said differential pressure increasing means is a mechanism (25; 26) for decreasing an amount of intake air supplied into at least one cylinder which corresponds to said at least one exhaust port (33) when said at least one communicating valve (37) is temporarily closed.

21. A device according to claim 20, wherein said mechanism (26) for decreasing an amount of intake air is arranged on at least one intake port (23) communicating between said at least one cylinder and the intake branch portion (21) of the intake system (2).

22. A device according to claim 18, wherein said differential pressure increasing means is a mechanism for varying a close timing of the intake valve of at least one cylinder which corresponds to said at least one exhaust port (33) so as to decrease an amount of intake air supplied into said at least one cylinder when said at least one communicating valve (37) is temporarily closed.

23. A device according to claim 18, wherein said differential pressure increasing means is a mechanism for varying an open timing of the exhaust valve of at least one cylinder which corresponds to said at least one exhaust port (33) to near a bottom dead center when said at least one communicating valve (37) is temporarily closed.

24. A device according to claim 17, further comprising a compulsive operating means (6) for operating at least one communicating valve (37) to be temporarily closed such that at least one exhaust port (33) is not communicated with the other exhaust port and for increasing a differential pressure between pressures upstream and downstream of said particulate trap (35) in said at least one exhaust port (33) when said at least one communicating valve (37) is temporarily closed in spite of an engine load operation.

## Patentansprüche

1. Vorrichtung zum Reinigen des Abgases einer Brennkraftmaschine (1) mit:
einer Partikelfalle (35), die an jedem Auslassanschluss (33) angeordnet ist, der eine Verbindung zwischen den Motorzylindern und dem Abgasvereinigungsabschnitt (31) in dem Abgassystem (3) herstellt; und
einer Hemmeinrichtung (34; 42a; 51), die zeitweilig das Abgas hemmen kann, das in zumindest eine Partikelfalle (35) einströmt, **gekennzeichnet durch**
einen Verbindungskanal (36) zum Verbinden von jedem Auslassanschluss (33) mit zumindest einem anderen Auslassanschluss an der stromaufwärtigen Seite von jeder Partikelfalle (35); und
ein Verbindungsventil (37), das an dem Verbindungskanal (36) angeordnet ist; und
eine Betätigungseinrichtung (6) zum Betätigen der Hemmeinrichtung (34; 42a; 51) um zeitweilig das Abgas zu hemmen, das in zumindest eine Partikelfalle (35) einströmt, und zum Betätigen zumindest eines Verbindungsventils (37), um geschlossen zu werden, so dass der Auslassanschluss (33), an dem die zumindest eine Partikelfalle angeordnet ist, nicht mit dem anderen Auslassanschluss verbunden ist, wenn es erforderlich ist, Asche von den Partikelfallen (35) zu beseitigen.

2. Vorrichtung nach Anspruch 1, wobei die Hemmeinrichtung ein Mechanismus (34) zum Drosseln des Abgassystems (3) ist.

3. Vorrichtung nach Anspruch 1, wobei die Hemmeinrichtung eine variable Düse (42a) ist für eine Turbine (42) des Turboladers (4), der an dem Abgassystem (3) angeordnet ist.

4. Vorrichtung nach Anspruch 1, wobei die Hemmeinrichtung ein Abgasrückführsteuerventil (51) ist, das an dem Abgasrückführkanal (5) angeordnet ist, der mit dem Abgassystem (3) an der stromabwärtigen Seite von jeder Partikelfalle (35) verbunden ist.

5. Vorrichtung nach Anspruch 1, wobei die Hemmeinrichtung eine Einrichtung ist zum Einstellen einer späten Öffnungszeitgebung des Auslassventils.

6. Vorrichtung zum Reinigen des Abgases einer Brennkraftmaschine (1) mit:
einer Partikelfalle (35), die an jedem Auslassanschluss (33) angeordnet ist, der eine Verbindung herstellt zwischen den Motorzylindern und dem Abgasvereinigungsabschnitt (31) in dem Abgassystem (3), **gekennzeichnet durch**
einen Verbindungskanal (36) zum Verbinden von jedem Auslassanschluss (33) mit zumindest einem anderen Auslassanschluss an der stromaufwärtigen Seite von jeder Partikelfalle (35);
ein Verbindungsventil (37), das an dem Verbindungskanal (36) angeordnet ist; und
eine Betätigungseinrichtung (6) zum Betätigen zumindest eines Verbindungsventils (37), um zeitweilig geschlossen zu werden, so dass zumindest ein Auslassanschluss (33) nicht mit dem anderen Auslassanschluss verbunden ist bei einem Betrieb des Motors mit hoher Last, wenn es erforderlich ist, Asche aus den Partikelfallen (35) zu beseitigen.

7. Vorrichtung zum Reinigen des Abgases einer Brennkraftmaschine (1) mit:
einer Partikelfalle (35), die an jedem Auslassanschluss (33) angeordnet ist, der eine Verbindung herstellt zwischen den Motorzylindern und dem Abgasvereinigungsabschnitt (31) in dem Abgassystem (3), **gekennzeichnet durch**
einen Verbindungskanal (37) zum Verbinden von jedem Auslassanschluss (33) mit zumindest einem anderen Auslassanschluss an der stromaufwärtigen Seite von jeder Partikelfalle (35);
eine Anhalteeinrichtung (11), die zeitweilig zumindest einen Zylinder stilllegen kann; und
eine Betätigungseinrichtung (6) zum Betätigen der Anhalteeinrichtung (11), um zeitweilig zumindest einen Zylinder stillzulegen, wenn es erforderlich ist, Asche aus den Partikelfallen (35) zu beseitigen.

8. Vorrichtung nach Anspruch 7, wobei die Betätigungseinrichtung (6) die Anhalteeinrichtung (11) betätigt unmittelbar nachdem eine Beschleunigung abgeschlossen ist oder eine Verzögerung begonnen wird in einem vorgegebenen Motorlastbetriebsbereich (I, II).

9. Vorrichtung nach Anspruch 7, die des weiteren eine Differenzdruckerhöhungseinrichtung (25; 26; 34; 42a; 51) aufweist zum Erhöhen eines Differenzdrucks zwischen einem Druck innerhalb dem zumindest ein Zylinder in einem Auslasshub, wenn der zumindest eine Zylinder stillgelegt wird durch die Anhalteeinrichtung (11), und einem Druck and der stromabwärtigen Seite der Partikelfalle (35) in dem Auslassanschluss (33), der den zumindest einen Zylinder mit dem Abgasvereinigungsabschnitt (31) verbindet.

10. Vorrichtung nach Anspruch 9, wobei die Differenzdruckerhöhungseinrichtung (34; 42a; 51) den Differenzdruck erhöht unmittelbar nachdem eine Beschleunigung abgeschlossen ist oder eine Verzögerung begonnen wird in einem vorgegebenen Motorlastbetriebsbereich (II).

11. Vorrichtung nach Anspruch 9, wobei die Differenzdruckerhöhungseinrichtung eine Hemmeinrichtung (34; 42a; 51) ist zum Hemmen des Abgases, das aus dem Abgasvereinigungsabschnitt herausströmt vor dem Auslasshub des zumindest einen Zylinders, wenn der zumindest eine Zylinder durch die Anhalteeinrichtung stillgelegt wird.

12. Vorrichtung nach Anspruch 9, wobei die Differenzdruckerhöhungseinrichtung ein Mechanismus (25; 26) ist zum Vermindern einer Ansaugluftmenge, die in den zumindest einen Zylinder zugeführt wird, wenn der zumindest eine Zylinder durch die Anhalteeinrichtung (11) stillgelegt wird.

13. Vorrichtung nach Anspruch 12, wobei der Mechanismus (26) zum Vermindern einer Ansaugluftmenge an dem Einlassanschluss (23) angeordnet ist, der den zumindest einen Zylinder mit dem Ansaugzweigabschnitt (21) des Ansaugsystems (2) verbindet.

14. Vorrichtung nach Anspruch 9, wobei die Differenzdruckerhöhungseinrichtung ein Mechanismus ist zum Ändern einer Schließzeitgebung des Einlassventils des zumindest einen Zylinders, um eine Ansaugluftmenge zu vermindern, die in den zumindest einen Zylinder hinein zugeführt wird, wenn der zumindest eine Zylinder durch die Anhalteeinrichtung (11) stillgelegt wird.

15. Vorrichtung nach Anspruch 9, wobei die Differenzdruckerhöhungseinrichtung ein Mechanismus ist zum Ändern einer Öffnungszeitgebung des Auslassventils des zumindest einen Zylinders nahe einem unteren Totpunkt, wenn der zumindest eine Zylinder durch die Anhalteeinrichtung (11) stillgelegt wird.

16. Vorrichtung nach einem der Ansprüche 7 bis 15, wobei ein Verbindungsventil (37) an dem Verbindungskanal (37) angeordnet ist, und wenn die Betätigungseinrichtung (6) die Anhalteeinrichtung (11) betätigt, um zeitweilig den zumindest einen Zylinder stillzulegen, zumindest ein Verbindungsventil geschlossen wird, so dass der Auslassanschluss (33), der den zumindest einen Zylinder mit dem Abgasvereinigungsabschnitt (31) in dem Abgassystem (3) verbindet, nicht mit dem anderen Auslassanschluss verbunden ist.

17. Vorrichtung zum Reinigen des Abgases einer Brennkraftmaschine (1) mit:
einer Partikelfalle, die an jedem Auslassanschluss (33) angeordnet ist, der eine Verbindung herstellt zwischen den Motorzylindern und dem Abgasvereinigungsabschnitt (31) in dem Abgassystem (3), **gekennzeichnet durch**
einen Verbindungskanal (36) zum Verbinden von jedem Auslassanschluss (33) mit zumindest einem anderen Auslassanschluss an der stromaufwärtigen Seite von jeder Partikelfalle (35);
ein Verbindungsventil (37), das an dem Verbindungskanal (36) angeordnet ist; und
eine Betätigungseinrichtung (6) zum Betätigen zumindest eines Verbindungsventils (37), um zeitweilig geschlossen zu werden, so dass zumindest ein Auslassanschluss (33) nicht mit dem anderen Auslassanschluss verbunden ist unmittelbar nachdem eine Beschleunigung abgeschlossen ist oder eine Verzögerung begonnen wird in einem vorgegebenen Motorlastbetriebsbereich (I, II), wenn es erforderlich ist, Asche von den Partikelfallen (35) zu beseitigen.

18. Vorrichtung nach Anspruch 17, die des weiteren eine Differenzdruckerhöhungseinrichtung (25; 26; 34; 42a; 51) aufweist zum Erhöhen eines Differenzdrucks zwischen Drücken stromaufwärts und stromabwärts der Partikelfalle (35) in dem zumindest einen Auslassanschluss (33), wenn das zumindest eine Verbindungsventil (37) zeitweilig geschlossen wird.

19. Vorrichtung nach Anspruch 18, wobei die Differenzdruckerhöhungseinrichtung eine Hemmeinrichtung (34; 42a; 51) ist zum Hemmen des Abgases, das von dem Abgasvereinigungsabschnitt (31) herausströmt bevor das zumindest eine Verbindungsventil (37) zeitweilig geschlossen wird.

20. Vorrichtung nach Anspruch 18, wobei die Differenzdruckerhöhungseinrichtung ein Mechanismus (25; 26) ist zum Vermindern einer Ansaugluftmenge, die in zumindest einen Zylinder hinein zugeführt wird, der dem zumindest einen Auslassanschluss (33) entspricht, wenn das zumindest eine Verbindungsventil (37) zeitweilig geschlossen wird.

21. Vorrichtung nach Anspruch 20, wobei der Mechanismus (26) zum Vermindern einer Ansaugluftmenge an zumindest einem Einlassanschluss (23) angeordnet ist, der den zumindest einen Zylinder mit dem Ansaugzweigabschnitt (21) des Ansaugsystems (2) verbindet.

22. Vorrichtung nach Anspruch 18, wobei die Differenzdruckerhöhungseinrichtung ein Mechanismus ist zum Ändern einer Schließzeitgebung des Einlassventils von zumindest einem Zylinder, der mit dem zumindest einen Auslassanschluss (33) übereinstimmt, um eine Ansaugluftmenge zu vermindern, die in den zumindest einen zylinder hinein zugeführt wird, wenn das zumindest eine Verbindungsventil (37) zeitweilig geschlossen wird.

23. Vorrichtung nach Anspruch 18, wobei die Differenzdruckerhöhungseinrichtung ein Mechanismus ist zum Ändern einer Öffnungszeitgebung des Auslassventils von zumindest einem Zylinder, der mit dem zumindest einen Auslassanschluss (33) übereinstimmt, nahe eines unteren Totpunkts, wenn das zumindest eine Verbindungsventil (37) zeitweilig geschlossen wird.

24. Vorrichtung nach Anspruch 17, die des weiteren eine Zwangsbetätigungseinrichtung (6) aufweist zum Betätigen zumindest eines Verbindungsventils (37), um zeitweilig geschlossen zu werden, so dass zumindest ein Auslassanschluss (33) nicht mit dem anderen Auslassanschluss verbunden ist, und zum Erhöhen eines Differenzdrucks zwischen Drücken stromaufwärts und stromabwärts der Partikelfalle (35) in dem zumindest einen Auslassanschluss (33), wenn das zumindest eine Verbindungsventil (37) zeitweilig geschlossen wird trotz eines Motorlastbetriebs.

## Revendications

1. Dispositif de purification des gaz d'échappement d'un moteur à combustion interne (1) comprenant :
un piège à particules (35) disposé sur chaque orifice d'échappement (33), réalisant une communication entre les cylindres du moteur et la partie de rassemblement des échappements (31) dans le système d'échappement (3), et
un moyen de limitation (34 ; 42a ; 51) qui peut limiter temporairement les gaz d'échappement s'écoulant dans au moins un piège à particules (35), **caractérisé par**
un passage de communication (36) destiné à faire communiquer chaque orifice d'échappement (33) avec au moins un autre orifice d'échappement du côté amont de chaque piège à particules (35), et
une soupape de communication (37) qui est disposée sur ledit passage de communication (36), et
un moyen de mise en oeuvre (6) destiné à mettre en oeuvre ledit moyen de limitation (34 ; 42a ; 51) en vue de limiter temporairement les gaz d'échappement s'écoulant dans au moins un piège à particules (35) et destiné à mettre en oeuvre au moins une soupape de communication (37) pour qu'elle soit fermée de sorte que l'orifice d'échappement (33), sur lequel ledit au moins un piège à particules est disposé, ne soit pas mis en communication avec l'autre orifice d'échappement, lorsqu'il est nécessaire d'éliminer les cendres desdits pièges à particules (35).

2. Dispositif selon la revendication 1, dans lequel ledit moyen de limitation est un mécanisme (34) destiné à étrangler le système d'échappement (3).

3. Dispositif selon la revendication 1, dans lequel ledit moyen de limitation est une buse variable (42a) destinée à une turbine (42) de turbocompresseur (4) disposée sur le système d'échappement (3).

4. Dispositif selon la revendication 1, dans lequel ledit moyen de limitation est une soupape de commande de recirculation des gaz d'échappement (51) qui est disposée sur un passage de recirculation des gaz d'échappement (5) relié au système d'échappement (3) du côté aval de chaque piège à particules (35).

5. Dispositif selon la revendication 1, dans lequel ledit moyen de limitation est un moyen destiné à retarder un instant d'ouverture de la soupape d'échappement.

6. Dispositif de purification des gaz d'échappement d'un moteur à combustion interne (1) comprenant :
un piège à particules (35) disposé sur chaque orifice d'échappement (33), réalisant une communication entre les cylindres du moteur et la partie de rassemblement des échappements (31) dans le système d'échappement (3),
**caractérisé par**
un passage de communication (36) destiné à faire communiquer chaque orifice d'échappement (33) avec au moins un autre orifice d'échappement du côté amont de chaque piège à particules (35),
une soupape de communication (37) qui est disposée sur ledit passage de communication (36), et
un moyen de mise en oeuvre (6) destiné à mettre en oeuvre au moins une soupape de communication (37) pour qu'elle soit temporairement fermée de telle sorte qu'au moins un orifice d'échappement (33) ne soit pas mis en communication avec l'autre orifice d'échappement au cours des fonctionnements en charge élevée du moteur, lorsqu'il est nécessaire d'éliminer les cendres desdits pièges à particules (35).

7. Dispositif de purification des gaz d'échappement d'un moteur à combustion interne (1) comprenant :
un piège à particules (35) disposé sur chaque orifice d'échappement (33), réalisant une communication entre les cylindres du moteur et la partie de rassemblement des échappements (31) dans le système d'échappement (3),
**caractérisé par**
un passage de communication (37) destiné à faire communiquer chaque orifice d'échappement (33) avec au moins un autre orifice d'échappement du côté amont de chaque piège à particules (35),
un moyen d'arrêt (11) qui peut temporairement arrêter au moins un cylindre, et
un moyen de mise en oeuvre (6) destiné à mettre en oeuvre ledit moyen d'arrêt (11) pour arrêter temporairement au moins un cylindre, lorsqu'il est nécessaire d'éliminer les cendres desdits pièges à particules (35).

8. Dispositif selon la revendication 7, dans lequel ledit moyen de mise en oeuvre (6) met en oeuvre ledit moyen d'arrêt (11) immédiatement après qu'une accélération est terminée ou qu'une décélération est commencée dans une zone de fonctionnement en charge du moteur prédéterminée (I, II).

9. Dispositif selon la revendication 7, comprenant en outre un moyen d'augmentation de pression différentielle (25 ; 26 ; 34 ; 42a ; 51) destiné à augmenter une pression différentielle entre une pression à l'intérieur dudit au moins un cylindre au cours d'une course d'échappement lorsque ledit au moins un cylindre est arrêté par ledit moyen d'arrêt (11) et une pression du côté aval dudit piège à particules (35) dans l'orifice d'échappement (33) qui réalise une communication entre ledit au moins un cylindre et la partie de rassemblement des échappements (31).

10. Dispositif selon la revendication 9, dans lequel ledit moyen d'augmentation de pression différentielle (34 ; 42a ; 51) augmente ladite pression différentielle immédiatement après qu'une accélération est terminée ou qu'une décélération est débutée dans une zone de fonctionnement en charge du moteur prédéterminée (II).

11. Dispositif selon la revendication 9, dans lequel ledit moyen d'augmentation de pression différentielle est un moyen de limitation (34 ; 42a ; 51) destiné à limiter les gaz d'échappement sortant de la partie de rassemblement des échappements avant une course d'échappement dudit au moins un cylindre lorsque ledit au moins un cylindre est arrêté par ledit moyen d'arrêt (11).

12. Dispositif selon la revendication 9, dans lequel ledit moyen d'augmentation de pression différentiel est un mécanisme (25 ; 26) destiné à diminuer une quantité d'air d'admission fournie dans ledit au moins un cylindre lorsque ledit au moins un cylindre est arrêté par ledit moyen d'arrêt (11).

13. Dispositif selon la revendication 12, dans lequel ledit mécanisme (26) destiné à diminuer une quantité d'air d'admission est disposé sur l'orifice d'admission (23) qui réalise une communication entre ledit au moins un cylindre et la partie d'embranchement d'admission (21) du système d'admission (2).

14. Dispositif selon la revendication 9, dans lequel ledit moyen d'augmentation de pression différentielle est un mécanisme destiné à faire varier un instant de fermeture de la soupape d'admission dudit au moins un cylindre de façon à diminuer une quantité d'air d'admission fournie dans ledit au moins un cylindre lorsque ledit au moins un cylindre est arrêté par ledit moyen d'arrêt (11).

15. Dispositif selon la revendication 9, dans lequel ledit moyen d'augmentation de pression différentielle est un mécanisme destiné à faire varier un instant d'ouverture de la soupape d'échappement dudit au moins un cylindre près d'un point mort bas lorsque ledit au moins un cylindre est arrêté par ledit moyen d'arrêt (11).

16. Dispositif selon l'une quelconque des revendications 7 à 15, dans lequel une soupape de communication (37) est disposée sur ledit passage de communication (36), et lorsque ledit moyen de mise en oeuvre (6) met en oeuvre ledit moyen d'arrêt (11) pour arrêter temporairement au moins un cylindre, au moins une soupape de communication est fermée de telle sorte que l'orifice d'échappement (33) qui réalise une communication entre ledit au moins un cylindre et la partie de rassemblement des échappements (31) dans le système d'échappement (3) n'est pas mis en communication avec l'autre orifice d'échappement.

17. Dispositif de purification des gaz d'échappement d'un moteur à combustion interne (1) comprenant :
un piège à particules disposé sur chaque orifice d'échappement (33), réalisant une communication entre les cylindres du moteur et la partie de rassemblement des échappements (31) dans le système d'échappement (3),
**caractérisé par**
un passage de communication (36) destiné à faire communiquer chaque orifice d'échappement (33) avec au moins un autre orifice d'échappement du côté amont de chaque piège à particules (35),
une soupape de communication (37) qui est disposée sur ledit passage de communication (36), et
un moyen de mise en oeuvre (6) destiné à mettre en oeuvre au moins une soupape de communication (37) pour qu'elle soit temporairement fermée de telle sorte qu'au moins un orifice d'échappement (33). ne soit pas mis en communication avec l'autre orifice d'échappement immédiatement après qu'une accélération est terminée ou qu'une décélération est débutée dans une zone de fonctionnement en charge du moteur prédéterminée (I, II), lorsqu'il est nécessaire d'éliminer les cendres desdits pièges à particules (35).

18. Dispositif selon la revendication 17, comprenant en outre un moyen d'augmentation de pression différentielle (25 ; 26 ; 34 ; 42a ; 51) destiné à augmenter une pression différentielle entre les pressions amont et aval dudit piège à particules (35) dans ledit au moins un orifice d'échappement (33) lorsque ladite au moins une soupape de communication (37) est temporairement fermée.

19. Dispositif selon la revendication 18, dans lequel ledit moyen d'augmentation de pression différentielle est un moyen de limitation (34 ; 42a ; 51) destiné à limiter les gaz d'échappement sortant de la partie de rassemblement des échappements (31) avant que ladite au moins une soupape de communication (37) ne soit temporairement fermée.

20. Dispositif selon la revendication 18, dans lequel ledit moyen d'augmentation de pression différentielle est un mécanisme (25 ; 26) destiné à diminuer une quantité d'air d'admission fournie dans au moins un cylindre qui correspond audit au moins un orifice d'échappement (33) lorsque ladite au moins une soupape de communication (37) est temporairement fermée.

21. Dispositif selon la revendication 20, dans lequel ledit mécanisme (26) destiné à diminuer une quantité d'air d'admission est disposé sur au moins un orifice d'admission (23) réalisant une communication entre ledit au moins un cylindre et la partie d'embranchement d'admission (21) du système d'admission (2).

22. Dispositif selon la revendication 18, dans lequel ledit moyen d'augmentation de pression différentielle est un mécanisme destiné à faire varier un instant de fermeture de la soupape d'admission d'au moins un cylindre qui correspond audit au moins un orifice d'échappement (33) de façon à diminuer une quantité d'air d'admission fournie dans ledit au moins un cylindre lorsque ladite au moins une soupape de communication (37) est temporairement fermée.

23. Dispositif selon la revendication 18, dans lequel ledit moyen d'augmentation de pression différentielle est un mécanisme destiné à faire varier un instant d'ouverture de la soupape d'échappement d'au moins un cylindre qui correspond audit au moins un orifice d'échappement (33) près d'un point mort bas lorsque ladite au moins une soupape de communication (37) est temporairement fermée.

24. Dispositif selon la revendication 17, comprenant en outre un moyen de mise en oeuvre obligatoire (6) destiné à mettre en oeuvre au moins une soupape de communication (37) pour qu'elle soit temporairement fermée de telle sorte qu'au moins un orifice d'échappement (33) ne soit pas mis en communication avec l'autre orifice et destiné à augmenter une pression différentielle entre les pressions amont et aval dudit piège à particules (35) dans ledit au moins un orifice d'échappement (33) lorsque ladite au moins une soupape de communication (37) est temporairement fermée en dépit d'un fonctionnement en charge du moteur.
